Europäisches Patentamt

European Patent Office

Office européen des brevets

(11) Veröffentlichungsnummer : **0 119 236**
**B1**

(12)                    EUROPÄISCHE PATENTSCHRIFT

(45) Veröffentlichungstag der Patentschrift :
30.07.86

(51) Int. Cl.⁴ : **B 23 B   9/08, B 23 Q 39/04**

(21) Anmeldenummer : 83902950.1

(22) Anmeldetag : 12.09.83

(86) Internationale Anmeldenummer :
PCT/DE 83/00161

(87) Internationale Veröffentlichungsnummer :
WO/8400909 (15.03.84 Gazette 84/07)

(54) **MEHRSPINDEL-DREHAUTOMAT.**

(30) Priorität : 10.09.82 DE 3234121

(43) Veröffentlichungstag der Anmeldung :
26.09.84 Patentblatt 84/39

(45) Bekanntmachung des Hinweises auf die Patenterteilung : 30.07.86 Patentblatt 86/31

(84) Benannte Vertragsstaaten :
CH DE FR GB LI

(56) Entgegenhaltungen :
US-A- 1 467 526
US-A- 2 023 779
US-A- 2 606 359

(73) Patentinhaber : MOELTZNER, Wilhelm
Eichkampstrasse 148
D-1000 Berlin 19 (DE)

(72) Erfinder : MOELTZNER, Wilhelm
Eichkampstrasse 148
D-1000 Berlin 19 (DE)

(74) Vertreter : Lüke, Dierck-Wilm, Dipl.-Ing.
Gelfertstrasse 56
D-1000 Berlin 33 (DE)

Jouve, 18, rue St-Denis, 75001 Paris, France

## Beschreibung

Die Erfindung bezieht sich auf einen Mehrspindel-Drehautomaten gemäss der Gattung des Patentanspruches 1.

Bei einem gattungsgemässen Mehrspindel-Drehautomaten gemäss DE-AS 2 036 766 sind die Werkzeuge auf einer Supportgruppe angeordnet, welche einen Längssupport und ein Paar Quersupporte aufweist. Letztere sind auf einem gemeinsamen Schlitten montiert. Das Verschieben der Supportgruppe erfolgt mit Hilfe von Zugstangen, die an einem Ende mit dem Schlitten der Längssupporte und der Quersupporte und an anderen Ende kinematisch mit einer feststehenden Steuerkurve verbunden sind, die an der Säule des Drehautomaten befestigt ist. Eine Bearbeitung eines in der Werkstückspindel aufgenommenen Werkstückes erfordert eine komplizierte und kombinierte Bewegung der Schlitten der Längs- und Quersupporte mit Hilfe der kinematisch mit der Steuerkurve verbundenen Zugstangen. Es ist somit notwendig, sowohl die Längssupporte als auch die Quersupporte radial bzw. axial in Bezug auf das in der Werkstückspindel befindliche Werkstück zu bewegen. Ferner erfordert ein Wechsel der Werkzeuge sowohl am Längssupport als auch am Quersupport getrennte Montagen zum Auswechseln der verschiedenen Längs- und Querbearbeitungswerkzeuge. Darüber hinaus ist bedingt durch die unterschiedlichen Längs- bzw. Querbewegungen eine relativ lange Bewegungs- und Bearbeitungszeit notwendig.

Der Erfindung liegt von daher die Aufgabe zugrunde, den gattungsgemässen Mehrspindel-Drehautomaten dahingehend zu verbessern, dass durch vereinfachte Bewegungen der Werkzeuge eine schnellere Bearbeitung, d. h. eine hohe Stückzahl pro Zeiteinheit möglich ist, und dass bei Abnutzung oder Bruch ein schnelles Auswechseln der Werkzeuge mit wenigen Handgriffen möglich ist.

Die Lösung dieser Aufgabe ergibt sich aus den kennzeichnenden Merkmalen des Patentanspruches 1. Hierdurch wird nur ein einziges Werkzeug-Aufnahmeelement, nämlich ein einziger Werkzeugkopf benötigt, welcher mittels der Werkzeugwellen axial bewegbar und schwenkbar gelagert ist. Somit erfolgt die radiale Zustellung des Werkzeuges zum in der Werkstückspindel gelagerten Werkstück durch ein einfaches Schwenken der Werkzeugwelle, welche für eine Längsbearbeitung der Werkstücke axial bewegt werden kann. Hierdurch können aber Vorgänge wie Längs- und Plandrehen, aber auch durch kombiniertes Schwenken und Axialbewegen der Werkzeuge Profildrehen, Kopieren u. dgl. bei hoher Stückzahl pro Zeiteinheit durchgeführt werden.

In besonders bevorzugter Weise werden die die Werkzeuge tragenden Werkzeugköpfe gemäss den Merkmalen des Unteranspruches 2 zwangsgesteuert durch Schwenken und Axialbewegen der Werkzeugwellen mittels Kulissenführungen, wobei die Achsen der Kulissen unter kleinen Winkeln gegen die Radialachse der diesen zugeordneten Führungsschlitten geneigt angeordnet sind. Hierdurch können radiale Bearbeitungsoperationen in einer Richtung und radiale Einstechoperationen in der Gegenrichtung ausgeführt werden. Diesen Bearbeitungsvorgängen können Axialbewegungen der Werkzeugwellen und damit der Werkzeuge zugeordnet werden.

Die Kulissensteuerungen ermöglichen durch die Anstellung der Kulissen unter einem kleinen Winkel gegen die Radialachse der zugeordneten Führungsschlitten ein Übersetzungsverhältnis zwischen den Steuerkurven und der effektiven Werkzeug-Bearbeitungsbewegung z. B. im Verhältnis 1 : 10.

In einer anderen Ausführungsform stehen die Werkzeugwellen unter Wirkung von Federelementen und den Werkzeugwellen sind an der Trommel gelagerte, axial verschiebbare Stößel zugeordnet, die mittels gehäusefester Kurvenscheiben gegen die Wirkung der Federelemente der Werkzeugwellen axial bewegbar sind. Auf diese Weise können die Werkzeuge zur Längsbearbeitung der Schäfte von Werkzeugen axial bewegt werden, wobei eine Rückstellung der Werkzeugwellen unter Wirkung der Federelemente erfolgt. Sofern gleichzeitig mit der Axialbewegung auch eine Schwenkbewegung der Werkzeugwellen erfolgt, können Anschrägungen, Spitzen, Rundungen u. dgl. ausgebildet werden.

Für längere Werkstücke können den Werkstückspindeln an der Trommel axial bewegbar gelagerte Gegenhalter für die Werkstücke zugeordnet werden. Diese dienen zur Führung der Werkstückschäfte bei der spanenden Bearbeitung mittels der schwenkbaren Werkzeuge. Die Gegenhalter können auch als drehangetriebene Spannzangen für die Werkstücke ausgebildet sein. In diesem Falle kann z. B. ein Umspannen eines Werkstückes innerhalb des Drehautomaten erfolgen, um z. B. bei Drehteilen mit in der Längsmitte angeordnetem Bund zunächst den einen Schaftteil und nach dem Umspannen den anderen Schaftteil spanend zu bearbeiten, ohne dass das Werkstück aus dem Drehautomaten entnommen werden muss. Die Gegenhalter können auch als Träger von Werkzeugen dienen, wobei nach Art eines Reitstockes eine Bearbeitung der Stirnfläche des Werkstückes durch Anfasen, Plandrehen oder Bohren möglich wird. Die Gegenhalter sind zweckmäßiger Weise auf an der Trommel gelagerten, axial beweglichen, drehangetriebenen Wellen angeordnet und über gehäusefeste Führungskurven mittels Führungselementen axial steuerbar.

Die Erfindung ermöglicht somit eine Vielzahl von Bearbeitungsvorgängen an den in die Werkstückspindeln eingespannten Werkstücken mit hoher Arbeitsgeschwindigkeit und zwar sowohl an den Außenseiten und Stirnflächen als auch den Innenflächen, ohne daß ein Umspannen oder Entnehmen des Werkstückes aus dem Drehautomaten notwendig wird. Für jede Werkzeugwelle mit Werkzeugkopf besitzt der Drehautomat einen eigenen Werkzeugsatz, der außerhalb des Drehautomaten entsprechend den geforderten Toleranzen ausgerichtet und bei Bruch oder Abnutzung leicht ausgetauscht werden kann. Der Werkzeugsatz kann zusätzlich zu den Eigenschaften der Werkzeugköpfe noch korrigiert werden. Eine solche Anpassung hat keinen Einfluß auf die anderen, mittels der anderen Werkzeugsätze noch zu bearbeitenden Werkstücke. Ein Werkzeugsatz hat vorzugsweise eine geschliffene Grundfläche mit einer durchgehenden Nute. In diesen werden z. B. durch Funkenerosion die unterschiedlichen Werkzeugaufnahmenenster eingearbeitet. Ist eine Schneide einer Wendeplatte abgenutzt, so kann diese nach dem Lösen der Befestigung gewendet und wieder eingespannt werden.

Aus der DE-AS 24 49 860 sind Werkstückspindeln bei Mehrspindel-Drehautomaten vorbekannt, bei denen jedoch wegen einer zwingend notwendigen Führung der Werkzeugschäfte auch nur eine Bearbeitung der Stirnseiten der Werkstücke durch Anfasen, Anspitzen od. dgl. möglich ist.

Weitere vorteilhafte Ausgestaltungen der Erfindung ergeben sich aus den weiteren Unteransprüchen.

Die Erfindung ist nachfolgend anhand zweier in den Zeichnungen dargestellter Ausführungsbeispiele eines Sechsspindel-Drehautomaten näher erläutert. Es zeigen :

Figur 1 einen Längsschnitt gemäß der Linie A-A in Fig. 2 durch das erste Ausführungsbeispiel,

Figur 2 eine Ansicht gemäß der Linie A-A in Fig. 1 auf die Trommel des Drehautomaten,

Figur 3 einen Teilschnitt gemäß der Linie B-B in Fig. 1,

Figur 4 eine Ansicht in Richtung Pfeil C in Fig. 3,

Figur 5 eine Ansicht gemäss Fig. 2 auf die Trommel des Drehautomaten in der zweiten Ausführungsform,

Figur 6 einen Schnitt gemäß der Linie A-B in Fig. 5,

Figur 7 ein vergrößertes Detail X aus Fig. 5,

Figur 8 die Ansicht X gemäß Fig. 6,

Figur 9 die Ansicht Z gemäß Fig. 6,

Figur 10 die Ansicht Y gemäß Fig. 6,

Figur 11 verschiedene Arbeitsbeispiele und

Figur 12 ein spezielles Arbeitsbeispiel.

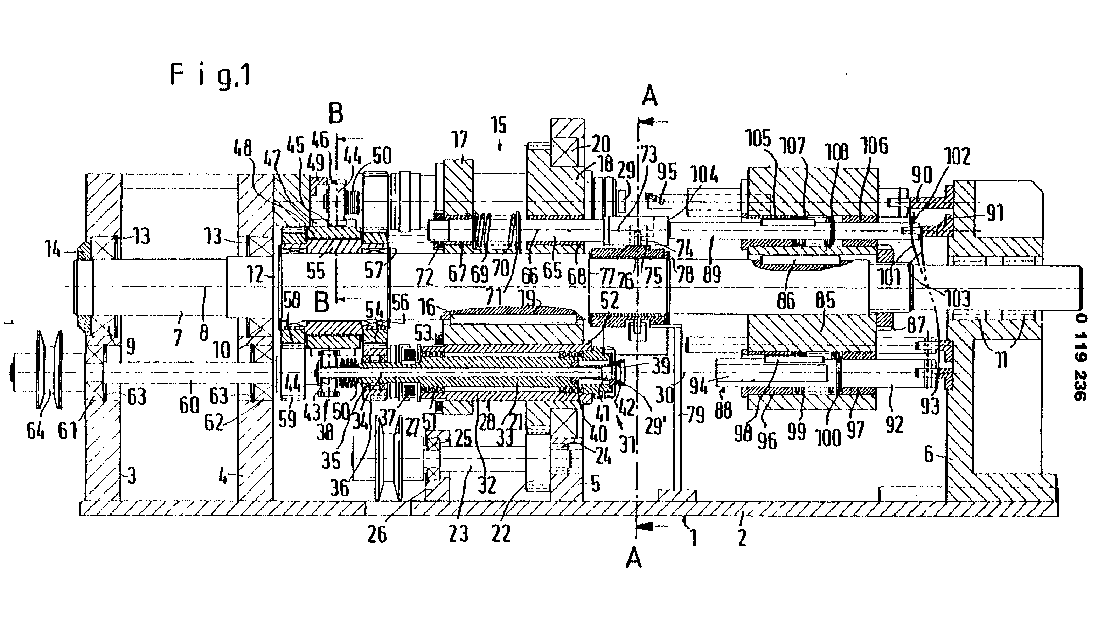

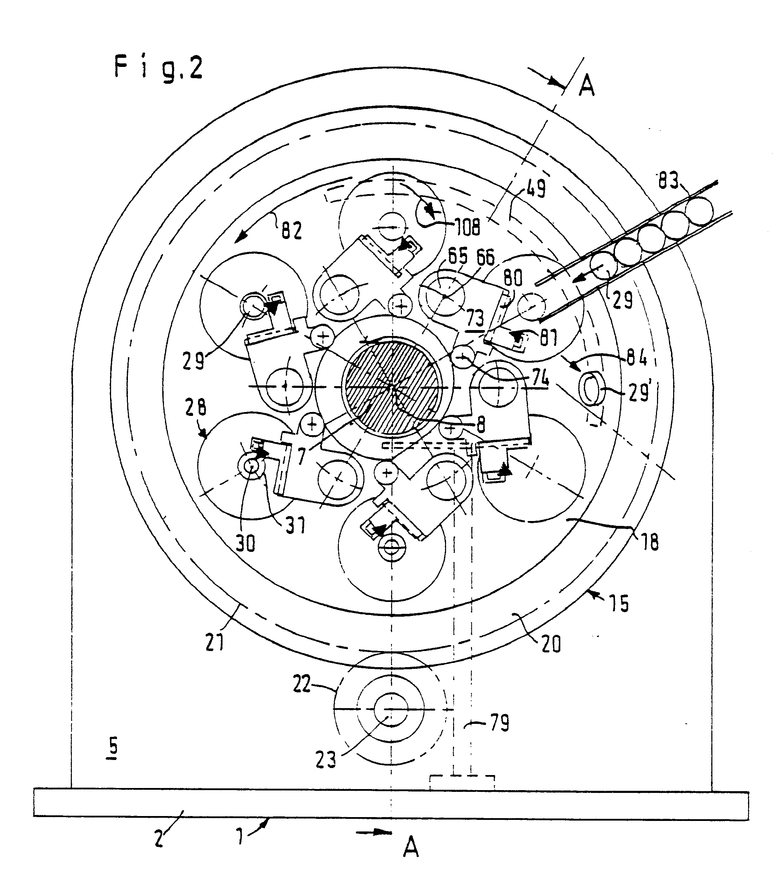

Der in den Figuren 1 und 2 dargestellte Drehautomat zur Nachbearbeitung von spanlos vorbearbeiteten, insbesondere fließgepressten, rotationssymmetrischen Werkstücken, wie z. B. Schrauben, Rad- und Schweißbolzen, Hohlkörper u. dgl. umfasst ein Gehäuse 1 aus einer Grundplatte 2 und vier Gehäusewänden 3 bis 6, die parallel zueinander und in unterschiedlichen Abständen voneinander auf der Grundplatte 2 festmontiert sind. Wie es im Schnitt gemäss Fig. 2 dargestellt ist, sind die Gehäusewände 3 bis 6 oben halbkreisförmig abgerundet. In den Gehäusewänden 3, 4 und 6 ist eine Trommelwelle 7 mit Trommelachse 8 in radialen Kugellagern 9, 10 bzw. in zwei nebeneinander angeordneten Nadellagern 11 gelagert. Das Kugellager 10 liegt mit seinem Innenring an einer Wellenschulter 12 und mit seinem Außenring an einem Seegerring 13. Das Kugellager 9 liegt mit seinem Außenring an einem weiteren Seegerring 13 an. Eine Wellenmutter 14 spannt die Kugellager 9, 10 derart, dass die Trommelwelle 7 axial festgelegt ist. Ein notwendiges axiales Wellenspiel ermöglichen die Nadellager 11 am entgegengesetzten Ende der Trommelwelle 7.

Im Bereich der etwa mittig zwischen den äusseren Gehäusewänden 3 und 6 angeordneten Gehäusewand 5 ist auf der Trommelwelle 7 eine Trommel 15 angeordnet und mittels einer Paßfeder 16 mit der Trommelwelle 7 drehfest verbunden. Die Trommel 15 besteht aus zwei im Abstand voneinander befindlichen Planscheiben 17, 18, die durch einen Nabenkörper 19, der zugleich die Paßfeder 16 aufnimmt, einstückig miteinander verbunden sind. Die Planscheibe 18 ist über ein Kugellager 20 innerhalb der Gehäusewand 5 gelagert und an ihrem Außenumfang unmittelbar im Bereich des Kugellagers 20 mit einer Stirnverzahnung 21 versehen. In diese greift ein Ritzel 22 mit seiner entsprechenden Stirnverzahnung. Das Ritzel 22 ist fest mit einer Ritzelwelle 23 verbunden, die mit einem Wellenende über ein Nadellager 24 in der mittleren Gehäusewand 5 und mit ihrem entgegengesetzten Ende über ein Kugellager 25 in einem mit der Grundplatte 2 festverbundenen Lagerbock 26 gelagert ist. Auf dem freien Ende der Ritzelwelle 23 ist eine Riemenscheibe 27 drehfest angeordnet, die zu einem nicht näher dargestellten Antrieb führt. Auf diese Weise kann mittels des nicht dargestellten Antriebes über die Riemenscheibe 27, die Ritzelwelle 23, das Ritzel 22 und die Stirnverzahnung 21 die Trommel 15 und mit dieser zugleich die Trommelwelle 7 drehangetrieben werden. Für die dargestellte Ausführungsform des Sechsspindel-Drehautomaten ist eine Umdrehungszahl von 10 U/min vorgesehen.

In der drehangetriebenen Trommel 15 sind sechs Aufnahmeeinrichtungen 28 (Werkstückspindeln) für Werkstücke 29 symmetrisch am Umfang der Trommel 15 verteilt und mit zur Trommelachse 8 parallelen Achsen 30 angeordnet. Die Aufnahmeeinrichtungen 28 sind als drehangetriebene Spannzangen 31 ausgebildet und umfassen je eine äussere Hülse 32, eine in dieser drehbar gelagerte innere Hülse 33, einen in dieser gelagerten Betätigungsdorn 34, ein auf der inneren Hülse 33 mittels Kugellagern 35 gelagertes Antriebsritzel 36, eine das Antriebsritzel 36 mit der inneren Hülse 33 verbindende elektromagnetische Kupplung 37, einen den Betätigungsdorn 34 steuernden Steuerkopf 38, der auf dem freien Ende des Betätigungsdornes 34 angeordnet und gegenüber der inneren Hülse 33 mittels eines Tellerfederpakets 50 abgestützt ist, sowie am entgegengesetzten Ende die Spannzange 31 bildende, federnde Spannzangenelemente 39, die mit ihrem Basisbund 40 in die innere Hülse 33 eingesetzt sind und unter Wirkung des Spannkegels 41 stehen, der am freien Ende des Betätigungsdornes 34 ausgebildet ist. Eine Verschlußmutter 42 sichert die Spannzangenelemente 39 in axialer Richtung.

Die vom Basisbund 40 ausgehenden, längsgeschlitzten, federnden Spannzangenelemente 39 nehmen auf einem äusseren Bund 42 das ringförmige Werkstück 29 auf. Durch axiale Verschiebung des Spannkegels 41 nach links (in Fig. 1 gesehen) innerhalb einer entsprechenden kegligen Innenbohrung der Spannzangenelemente 39 werden diese radial nach aussen gedrückt und spannen das kreisscheibenförmige Werkstück 29 an seinem inneren Umfang ein. Die Spannkraft wird durch des Tellerfederpaket 50 aufgebracht, das unter Wirkung des Steuerkopfes 38 steht. Dieser umfasst einen auf dem Betätigungsdorn 34 axial festen und mit DU-Gleitlagern 43 radial gleitbewegbaren Ringkörper 44, an welchem an zwei diametral gegenüberliegenden Wellenzapfen mit Radiallagern 45, 46 angebracht sind. Das Radiallager 45 ist in axialen Nuten 47 eines mit einem DU-Gleitlager auf einer Zahnradnabe 55 drehbar gelgerten Gleitring 48 geführt, der über gestrichelt dargestellte Träger zwischen den Ritzeln 36 mit der Trommel 15 drehfest verbunden ist. Das Radiallager 46 läuft entlang einer Kurve 49, die an der Gehäusewand 4 festgelegt ist. Auf diese Weise kann der Steuerkopf 38 mittels seines innerhalb der axialen Nuten 47 axial bewegbaren Kugellagers 45 beim Umlauf der Trommel 15 in Richtung der Achse 30 der Aufnahmeeinrichtung 28 unter Wirkung der Kurvenbahn 49 hin- und herbewegt werden. Eine Verdrehung des Ringkörpers 44 selbst ist jedoch nicht möglich. Mittels der Kurvenbahn 49 wird somit beim Umlauf der Spannzange 31 zusammen mit der Trommel 15 eine Öffnungs- und Schließbewegung der Spannzange 31 erzeugt, wobei die Schließkraft ausschliesslich durch das sich entspannende Tellerfederpaket 50 hervorgerufen wird, da sich die Kurve 49 — wie in Fig. 2 gezeigt — nur um einen Umlaufwinkel von etwa 120° erstreckt. Die innere Hülse 33 (Arbeitsspindel) der Spannzange 31 ist mittels Radiallagern 51 innerhalb der äusseren Hülse 32 gelagert, welche in eine Längsbohrung innerhalb der Trommel 15 eingesetzt ist. Ein umlaufender Bund 52 der äusseren Hülse 32 liegt an der Aussenseite der Trommel 15 im Bereich der Gehäusewand 5 an. Auf der gegenüberliegenden Seite der Trommel 15 ist die äussere Hülse 32 durch eine Wellenmutter 53 festgelegt. Die innere Hülse (Werkstückspindel) 33 ist über die elektromagnetische Kupplung 37 mit dem Antriebsritzel 36 verbunden, welches mit einem Zahnrad 54 kämmt, das auf der Trommel 7 frei drehbar gelagert ist. Hierzu ist eine Zahnradnabe 55 mittels Lagern 56 und Seegerringen 57 auf der Trommelwelle 7 radial drehbar aber axial unverschiebblich gelagert. Die Zahnradnabe 55 weist in einem Abstand zum Zahnrad 54 ein weiteres Zahnrad 58 auf, das unmittelbar neben der Gehäusewand 4 angeordnet ist und das mit einem Ritzel 59 in Eingriff steht. Dieses ist auf einer Ritzelwelle 60 fliegend gelagert, welche wiederum mittels Lagern 61 und 62 in den Gehäusewänden 3 bzw. 4 gelagert ist. Die Lager 61, 62 sind durch Seegerringe 63 festgehalten. Auf dem, dem Ritzel 59 entgegengesetzten Ende der Welle 60 ist eine Riemenscheibe 64 fliegend gelagert, die zu einem weiteren, nicht näher dargestellten Antrieb führt. Dieser treibt über die Riemenscheibe 64, die Ritzelwelle 60, das Ritzel 59, die Zahnradnabe 55 mit den Zahnrädern 58 und 54 das Antriebsritzel 36 ständig an, welches auf der inneren Hülse 33 einer jeden Aufnahmeeinrichtung 28 mittels der Lager 35 gelagert ist. Bei eingeschalteter elektromagnetischer Kupplung 37 kann mittels des ständig drehangetriebenen Antriebsritzels 36 die innere Hülse 33 und damit die Spannzange 31 drehangetrieben werden. In der Ausführungsform wird eine Spannzange 31 mit einer Drehzahl zwischen 1 500 und 3 000 U/min angetrieben, wodurch je nach Umfang des Werkstückes 29 Schnittgeschwindigkeiten von etwa 100/min resultieren. Durch Ausschalten der elektromagnetischen Kupplung 37 einer Spannzange 31 kann diese kurzfristig stillgesetzt werden, da dann das Antriebsritzel frei auf der inneren Hülse 33 umläuft.

Ebenfalls parallel zur Trommelachse 8 und symmetrisch am Umfang der Trommel 15 verteilt, sind zwischen den Aufnahmeeinrichtungen 28 für die Werkstücke 29 sechs Werkzeugwellen 65 mit zur Trommelachse 8 paralleler Werkzeugschwenkachse 66 innerhalb der Trommel 15 gelagert. Hierzu sind in die Planscheiben 17, 18 der Trommel 15 Gleitbüchsen 67 bzw. 68 eingesetzt, in denen die Werkzeugwellen 65 schwenkbeweglich und axial beweglich geführt sind. Zwischen den Planscheiben 17, 18 ist auf jeder Werkzeugwelle 65 eine Torsionsfeder 69 mit Axialspannung aufgebracht, die sich zwischen der Planscheibe 17 und einer auf der Werkzeugwelle 65 mittels eines Seegerringes 71 festgelegten Druckscheibe 70 axial abstützt und an der Planscheibe 17 sowie an der Werkzeugwelle 65 im Bereich der Druckscheiben 70 zur Bewirkung einer Torsionsspannung festgelegt ist. Auf der der Torsionsfeder 69 gegenüberliegenden Seite der Planscheibe 17 ist auf die Werkzeugwelle 65 eine Wellenmutter 72 aufgeschraubt, die eine Begrenzung der Axialbewegung der Werkzeugwelle in Richtung nach rechts (in Fig. 1 gesehen) bewirkt.

Ausserhalb der Planscheibe 18 der Trommel 15 trägt jede Werkzeugwelle 65 einen Werkzeugkopf 73, der unter Wirkung der Torsionsfeder 69 mittels einer Führungsrolle 74 an einer Steuerkurve 75 anliegt, die mittels eines Gleitlagers 76 auf der Trommelwelle 7 gleitbar und zwischen einem Absatz 77 der Trommelwelle 7 und einem Seegerring 78 axial festgelegt ist. Die Steuerkurve 75 ist über einen Stützarm 79 mit der Grundplatte 2 des Gehäuses 1 festverbunden. Der Stützarm 79 ist im Bereich der Steuerkurve 75 abgewinkelt und liegt rechts (in Fig. 1 gesehen) ausserhalb des Bereiches der Steuerkurve 75.

Jeder Werkzeugkopf 73 trägt einen Werkzeugträger 80 mit einem Schneidewerkzeug 81. Dieses ist insbesondere als Wendeplatte bzw. Messerkopf mit beispielsweise 40 Messerkombinationen ausgeführt, das eine Genauigkeit von ± 0,01 mm auch im rauhen Werkstattbetrieb ermöglicht. Die Spitze des Schneidewerkzeuges 81 weist radial auf die Drehachse des Werkstückes 29, das ist die Achse 30 der Aufnahmeeinrichtung 28.

Wie es in Fig. 2 dargestellt ist, rotiert die Trommel 15 im Gegenuhrzeigersinn gemäss Pfeil 82, wohingegen die Spannzangen 31 mit den Werkstücken 29 in Uhrzeigerrichtung gemäss Pfeil 108 rotieren. Eine Zuführungsschiene 83 ist etwa um 60° vor der oberen Position der Aufnahmeeinrichtungen 28 für die Werkstücke 29 vorgesehen, welche nach einem Umdrehungswinkel der Aufnahmeeinrichtung 28 von etwa 330° in der Abführungsposition 84 wieder abgeführt werden.

Ein Arbeitsvorgang mit dem bisher beschriebenen Teil des Sechsspindel-Drehautomaten läuft wie folgt ab : Über die Zuführungsschiene 83 wird ein spanlos vorbearbeitetes, insbesondere fließgepreßtes rotationssymmetrisches Werkstück 29, wie z. B. Hohlkörper, Schrauben, Rad- oder Schweißbolzen od. dgl. einer Spannzange 31 zugeführt und vom Bund 42 der Spannelemente 39 aufgenommen. Unter Wirkung der Kurvenbahn 49 ist in dieser Position der Steuerkopf 38 gegen die Wirkung des Tellerfederpaketes 50 nach rechts (in Fig. 1 gesehen) gefahren, wodurch der Spannkegel 41 die Spannzangenelemente 39 freigibt, welche unter Wirkung ihrer Federkraft nach innengedrückt sind. Sobald das zugeführte Werkstück 29 von den Spannzangenelementen 39 aufgenommen ist, wird der Steuerkopf 38 beim Verlassen der kurzen Kurvenbahn 49 nach links (Fig. 1 gesehen) unter Wirkung des Tellerfederpaketes 50 bewegt, wodurch das Werkstück 29 von den Spannzangenelementen 39 der Spannzange 31 eingespannt wird. Während die Trommel 15 in Gegenuhrzeigerrichtung (Pfeil 82) rotiert, wird nun unter Wirkung der elektromagnetischen Kupplung 37 die innere Hülse 33 der Spannzange 31 in Arbeitsdrehbewegung im Uhrzeigersinn gemäss Pfeil 108 angetrieben. Der Antrieb erfolgt über die linksseitig angeordnete Riemenscheibe 64 und die Verzahnungen 59/58 sowie 54/36.

Wie es Fig. 2 zeigt, nimmt der radiale Abstand der Steuerkurve 75 von der Trommelachse 8 bei der Drehbewegung der Trommel 15 in Gegenuhrzeigerrichtung gemäss Pfeil 82, ausgehend von der Zuführungsschiene 83 zu, wodurch jeder Werkzeugkopf 73 mit seinem Schneidwerkzeug 81 gegen das Werkstück 29 zur spanenden Bearbeitung geschwenkt wird. Etwa nach einer Umdrehung der Trommel 15 von 240° ist die spanende Bearbeitung beendet. In diesem Bereich hat die Steuerkurve 75 einen starken Abfall in Richtung auf die Trommelachse 8 aufzuweisen, wodurch der Werkzeugkopf 73 unter Wirkung der Torsionsfeder 79 ausser Eingriff mit dem fertig bearbeiteten Werkstück 29' kommt, das in der Abführungsposition 84 als fertig bearbeitetes Werkstück ausgeworfen wird. Auf diese Weise können mehrere Arbeitsoperationen radial am Werkzeugschaft durchgeführt werden.

Um Arbeitsoperationen auch in Längsrichtung des Werkzeugschaftes und stirnseitig sowie innen ausführen zu können, ist zwischen der mittleren Gehäusewand 5 und der rechten äusseren Gehäusewand 6 auf der Trommelwelle 7 eine weitere Planscheibe 85 mittels einer Paßfeder drehfest und mittels einer Wellenmutter 87 axial unverschieblich gelagert. In dieser zur Trommel 15 gehörenden dritten Planscheibe 85 sind den Aufnahmeeinrichtungen 28 und damit den Spannzangen 31 für die Werkstücke 29 gegenüberliegende Gegenhalter 88 und den Werkzeugwellen 65 gegenüberliegende Stössel 89 gelagert, die beide mittels an der Gehäusewand 6 befestigter Kurvenscheiben 90 bzw. 91 axial bewegbar geführt sind.

Jeder Gegenhalter 88 besteht aus einem Spanndorn 92, der an einem Ende mittels einer Rolle 93 an der zugeordneten, axial gerichteten Kurvenscheibe 90 anliegt und an seinem anderen Ende eine teilweise geschlitzte Aufnahmebohrung 94 für ein weiteres Werkzeug 95 trägt, das auswechselbar in die Aufnahmebohrung 94 eingesteckt ist. Der Spanndorn 92 ist in einer Axialbohrung der Planscheibe 85 mittels Führungsbuchsen 96, 97 axial verschiebbar, aber unter Wirkung einer Paßfeder 98 innerhalb der Führungsbuchse 96 unverdrehbar geführt. An der inneren Stirnseite der Führungsbuchse 96 stützt sich eine axiale Spiralfeder 99 ab, die mit ihrem anderen Ende gegen eine auf dem Spanndorn 92 mittels eines Seegerringes festgelegte Stützscheibe 100 drückt. Auf diese Weise wird der Spanndorn 92 über seine Führungsrolle 93 ständig gegen die axial gerichtete Kurvenscheibe 90 gedrückt und kann unter Wirkung der Kurvenbahn 101 der Führungskurve 90 axial gegen das Werkstück 29 gegen die Wirkung der Feder 99 zugestellt werden.

In gleicher Weise wie der Spanndorn 92 stützt sich auch der Stössel 89 über eine Führungsrolle 102 an seiner ihm zugeordneten Kurvenscheibe 91 ab, welche die Kurvenbahn 103 beschreibt. Mit seinem anderen Ende liegt der Stössel 89 an der Stirnseite 104 des ihm zugeordneten Werkzeugkopfes 73 an. Auch der Stössel 89 ist über Führungsbuchsen 105, 106 innerhalb einer Axialbohrung in der zur Trommel 15 gehörenden Planscheibe 85 gelagert und mittels einer Spiralfeder 107 ständig über seine Führungsrolle 102 gegen seine Führungsbahn 103 angedrückt. Die Spiralfeder 107 stützt sich an der inneren Stirnseite der Führungsbuchse 105 ab und liegt mit ihrem anderen Ende an einer Stützscheibe 108 an, die mittels eines Seegerringes auf dem Stössel 89 festgelegt ist.

Es ist wesentlich, daß die Planscheibe 85 drehfest mit der Trommelwelle 7 verbunden ist und somit synchron mit der Trommel 15 umläuft. Somit können die Werkzeugköpfe 73 unter Wirkung der Steuerkurve 91 in Richtung der Werkzeugschwenkachse 66 axial-hin- und herbewegt werden, wodurch Längsbearbeitungen der Werkstücke 29 ermöglicht werden. Durch eine gleichzeitige Radialbewegung der Werkzeugköpfe 73 können somit auch Schrägflächen, Spitzen und dgl. an Werkstücken 29 ausgebildet werden.

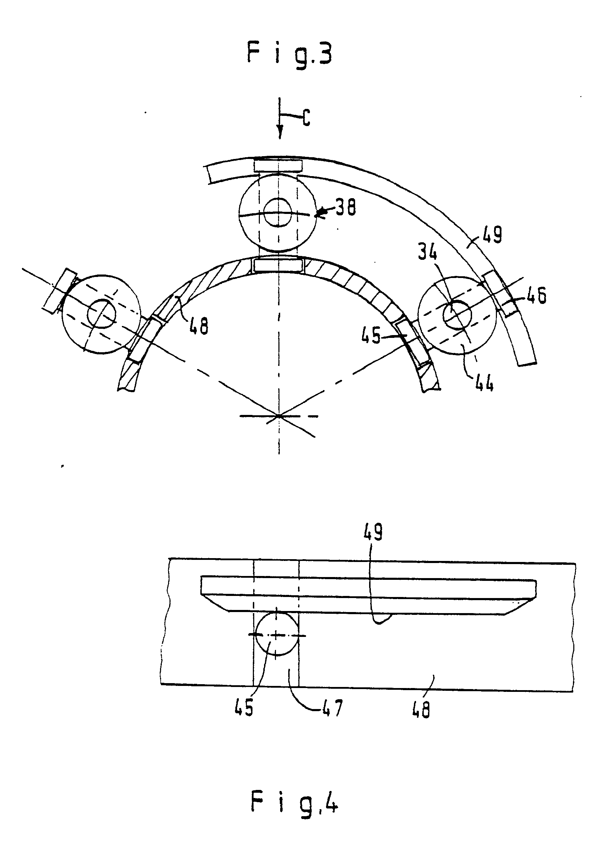

Die in den Figuren 3 und 4 prinzipiell als Teilschnitt dargestellte Führungseinrichtung für den Steuerkopf 38 der Spannzangen 31 der Werkstückaufnahmeeinrichtungen 28 zeigt die radiale Zwangsführung der Steuerköpfe 38 mittels der in den radialen Nuten 47 des Gleitringes 48 geführten Lager 45, wobei der Gleitring 48 selbst mit der Trommel 15 über in Fig. 1 nur gestrichelt dargestellte Träger fest verbunden ist. Die Kurve 49 zur Führung und axialen Bewegung des Steuerkopfes 38 über dessen Lager 46 erstreckt sich nur über einen geringen Umfangteil zwischen der Abführungsposition 84 und der Zuführungsschiene 83 für die Werkstücke 29' bzw. 29.

Es wird nachstehend eine Zusammenfassung der Funktion des beschriebenen Sechsspindel-Drehautomaten gegeben. Die ständig umlaufende Trommel 15, die aus den Planscheiben 17, 18 einerseits und 85 andererseits besteht und mit den sechs Werkstück-Aufnahmeeinrichtungen 28 ausgerüstet ist, die von dem Kurvenstück 49 gesteuert, nacheinander ihre Spannzangen 31 öffnen und nach Aufnahme der Werkstücke 29 wieder schliessen, benötigt etwa 2/6tel des Umlaufes für den Werkstückwechsel im Bereich der Kurve 49, während die restlichen 4/6-tel des Umlaufes dem eigentlichen Zerspanungsvorgang dienen. Jeder Werkstückaufnahmeeinrichtung 28 ist ein Werkzeugträger 73 zugeordnet, der so ausgebildet ist, dass der eigentliche Werkzeugsatz ausserhalb des Automaten justiert und mit einem einzigen Handgriff ausgetauscht werden kann. Hierzu hat jeder Werkzeugkopf 73 eine geschliffene Planfläche mit einer durchgehende Nute zur Aufnahme des Werkzeugträgers 80. In diesem sind, insbesondere durch Funkenerosion, die unterschiedlichen Aufnahmenester für die Werkzeuge 81, insbesondere Wendeplatten, eingearbeitet. Ist eine Schneide der Wendeplatte abgenutzt, so kann diese nach Lösen ihrer Einspannung gewendet und wieder befestigt werden.

Zusammen mit jeder Werkzeug-Aufnahmeeinrichtung 28 rotiert auf gleicher Achse ein entsprechender Gegenhalter 88, der sowohl als Gegenhalter (Reitstock) als auch als Halter für ein Werkzeug 95, wie Bohrer, Innendrehwerkzeug und dgl. Anwendung findet. Durch die Kombination des radial über die zentrale Kurve 75 angreifenden Werkzeuges 81 mit dem axial verschiebbaren, ebenfalls über eine Kurve 91 gesteuerten Reitstock ergibt sich eine Vielfalt von Anwendungsmöglichkeiten in radialer und axialer Richtung. Beispielsweise kann mit einem Einprofilwerkzeug jegliche Kontur innerhalb des Arbeitsbereiches des Drehautomaten hergestellt werden.

Durch entsprechende Anordnung der Kurven 90, 91 kann, Beispielsweise vollautomatisch lediglich durch entsprechende Axial- und Radialbewegungen die spanabhebende Gestaltung einer Spitze an einem Werkstück 29 durchgeführt werden, indem die erste Zerspanung kurz und tief, jede weitere hingegen länger und mit geringerer Vorschubgeschwindigkeit erfolgt. Es kann auf jegliche Programmierung mit allen ihren Fehlerquellen verzichtet werden. Da der eigentliche Arbeitsvorgang, die Zerspanung, innerhalb von Bruchteilen einer Sekunde erfolgt, ist die Ausbringung pro Zeiteinheit lediglich abhängig vom Schwierigkeitsgrad der Zuführung und der robusten Spannung der zu bearbeitenden Werkstücke 29.

Der von der zentralen Kurve 75 gesteuerte Werkzeugkopf 73 befindet sich bei der Werkstückübernahme ausserhalb des Wechselbereiches und nähert sich dem Werkstück 29 erst, wenn dieses sicher von der Spannzange 31 erfasst ist. Während nun der Zerspanungsprozess anläuft, übernimmt bereits die nächste Spannzange 31 das nächste Werkstück 29. Auf dem Umfang von 360° verteilt befindet sich stets eine Spannzange 31 in der Werkstückaufnahmestation 83, vier Spannzangen 31 befinden sich mit ihren zugeordneten Werkstücken im Zerspanungsprozess und eine Spannzange 31 befindet sich in der Auswerfposition 84 für ein fertig bearbeitetes Werkstück 29'. Die eigentliche Zerspanungsarbeit erfolgt innerhalb von etwa 240° Umfangswinkel. Bei einer durchschnittlichen Schnittgeschwindigkeit von 100 m/min, einem Werkstück von etwa 20 mm Durchmesser und einer Umlaufdrehzahl der Trommel 15 von 10 U/min stehen somit 100 Umdrehungen pro Minute zur Verfügung, um einer Spandicke von 0,1 mm axial oder radial einen Arbeitsweg von 10 mm zu verfahren. Durch entsprechende Anordnung kann der axiale Vorschub durch einen radialen Vorschub abgelöst werden, wobei ebenfalls insgesamt 10 mm an Vorschub erzielt werden. Der Drehautomat ist so ausgestaltet, dass gleichzeitig eine Zentrierung bzw. eine Bohrung im Werkstück 29 ausgebildet werden kann, bei Hohlkörpern eine Ausdrehung, deren Kontur von der Werkzeugform bestimmt wird. Der Drehautomat kommt bei der beschriebenen Arbeitsweise auf eine Leistung von mindestens 60 Werkstücken/pro/min.

Der beschriebene Sechsspindel-Drehautomat kann auch als doppelseitiger-Sechsspindel-Drehautomat zur Rundum-Bearbeitung von Preßteilen eingesetzt werden. Hierbei wird die rechts von der Schnittlinie A-A in Fig. 1 gelegene Planscheibe 85 mit den ihr zugeordneten Bauteilen durch eine Trommelanordnung ersetzt, die der linksseitig von der Schnittlinie A-A liegenden Trommelanordnung entspricht, jedoch genau spiegelbildlich zu dieser angeordnet ist. Dabei übernimmt der linksseitig angeordnete Teil des Drehautomaten die Werkstücke und spannt diese — wie vorstehend beschrieben — zur Bearbeitung ein. Nach der Bearbeitung wird die jeweilige Spannzange 31 geöffnet und das auf der einen Seite bearbeitete Werkstück auf die bereits gegenüberstehende Arbeitsspindel des anderen Spindelsatzes geschoben. Für einen kürzeren Zeitraum ist das Werkstück von beiden Spannzangen umfasst. Dann jedoch öffnet sich die linke Spannzange, während die rechte mit der automatisch geschlossenen Spannzange zurückfährt und zu dem dort in Bereitschaft stehenden Werkzeugsatz in Arbeitsposition gelangt. Während eines ganzen Umlaufes kann nun der für die linke Seite des Werkstückes vorgesehene Zerspanungsprozess erfolgen. Erst dann wird das Werkstück — nach somit zwei Umdrehungen auf den beiden sich gegenüberstehenden Trommelanordnungen — ausgeworfen.

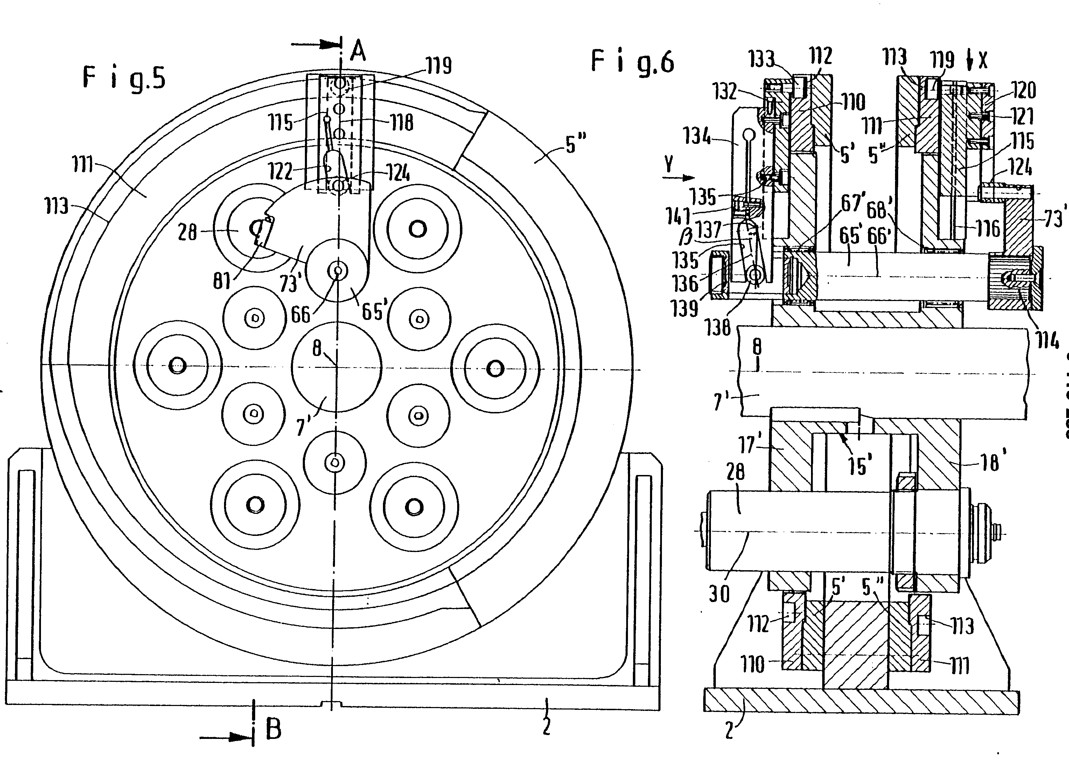

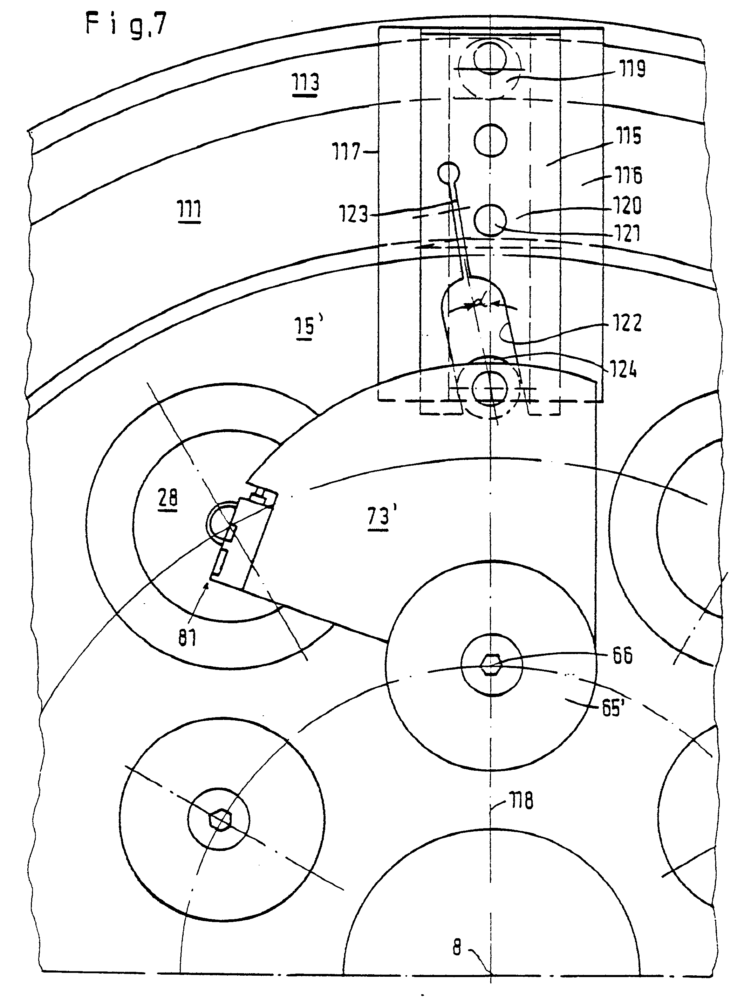

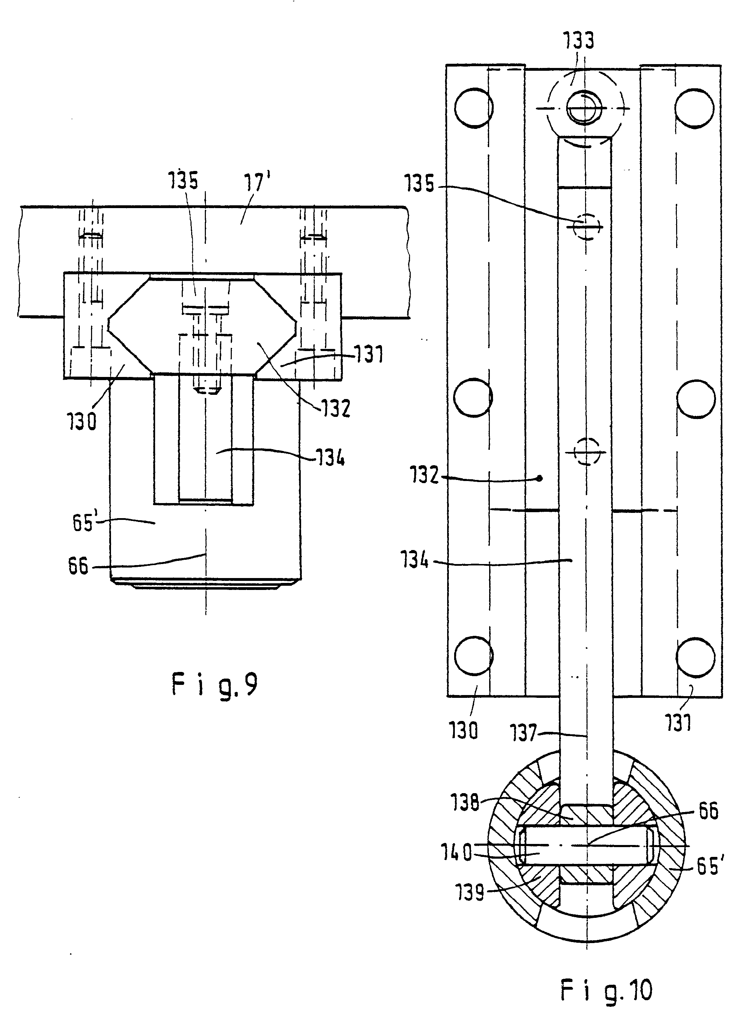

Bei der in den Fig. 5 bis 11 dargestellten zweiten Ausführungsform eines Sechsspindel-Drehautomaten sind die Werkzeugwellen 65' in den Planscheiben 17', 18' der Trommel 15' mittels Nadellagern 67', 68' drehbar und axial beweglich gelagert. Die Planscheiben 17', 18' der auf der Trommelwelle 7' gelagerten Trommel 15' sind von Segmentstücken 110, 111 umgeben, in welchen die geschlossenen Führungsnuten 112, 113 jeweils stirnseitig ausgebildet sind, welche die Steuerkurven 75' bilden. Die Segmentstücke 110, 111 umgeben die Trommel 15' um den zur Bearbeitung eines Werkstückes notwendigen Umfang und sind an Gehäusewänden 5', 5" festgelegt, welche mit der Grundplatte 2 des Drehautomaten festverbunden sind.

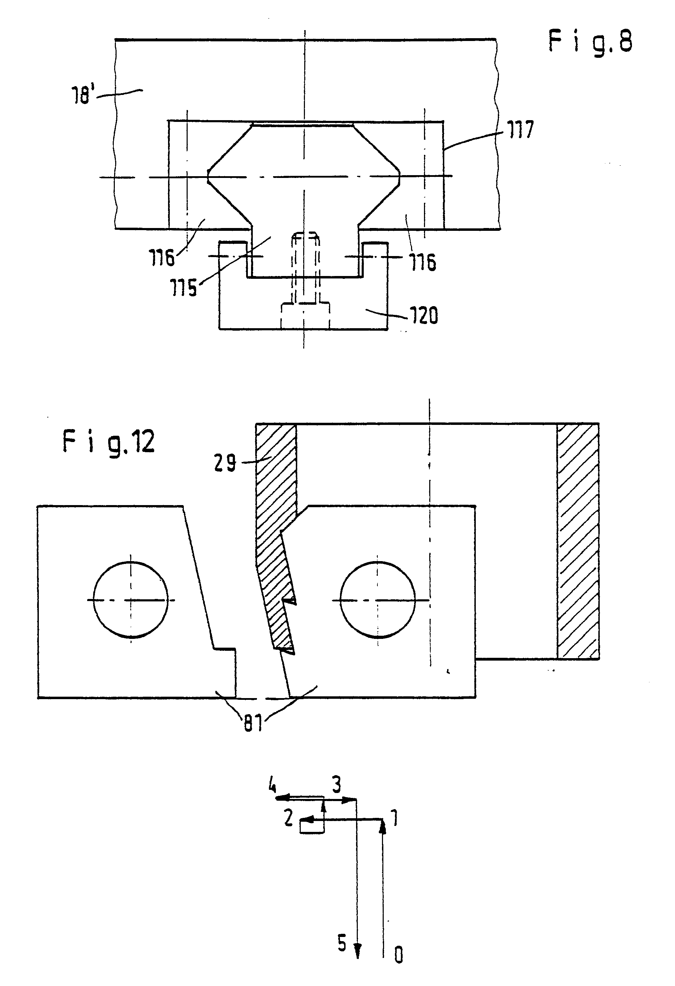

Jede Werkzeugewelle 65' trägt mittels einer Keilverzahnung 114 einen segmentförmigen Werkzeugkopf 73', welcher das eigentliche Werkzeug 81 trägt, das jeweils einer Werkstückspindel 28 zugeordnet ist. Radial zur Trommelachse 8 und zur Achse 66 jeder Werkzeugwelle 65 ist jeder Werkzeugwelle 65 ein Führungsschlitten 115 zugeordnet, der im Querschnitt die Form eines Doppel-V hat, wie es Fig. 8 zeigt. Jeder Führungsschlitten 115 ist in zwei Führungsschienen 116 gelagert, welche eine M-Form bilden. Die beiden Führungsschienen 116 sind innerhalb einer Ausnehmung 117 der Planscheibe 18' eingesetzt. Die Achse 118 des Führungsschlittens 115 verläuft radial zur Achse der Trommel 15' und der Achse 66 der zugeordneten Werkzeugwelle 65'.

Der Führungsschlitten 115 trägt am äusseren Ende eine Führungsrolle 119, welche in der Führungsnut 113 des Segmentstückes 111 geführt ist. Der Führungsschlitten 115 trägt auf seiner Vorderseite ein Kulissenstück 120, welches mit drei in der Achse des Führungsschlittens 115 liegenden Gewindeschrauben 121 festgelegt ist. Das Kulissenstück 120 weist am der Führungsrolle 119 entgegengesetzten Ende eine Kulisse 122 auf, deren Achse unter einem kleinen Winkel α gegen die Radialachse 118 des Führungsschlittens 115 gerichtet ist. Die Kulisse 122 setzt sich innerhalb des Kulissenstückes 120 in einem Schlitz 123 fort, welcher die Möglichkeit zur Justierung der Weite der Kulisse 122 mittels nicht dargestellter Klemmschrauben ermöglicht.

In der Kulisse 122 ist eine weitere Führungsrolle 124 geführt, welche auf der zur Trommel 15' gerichteten Innenseite des segmentartigen Werkzeugkopfes 73' festgelegt ist.

Entsprechend Fig. 2 sind auch beim zweiten Ausführungsbeispiel gemäss den Fig. 5 und 6 jeder der sechs Werkstückspindeln 28 eine Werkzeugwelle 65' mit Werkzeugkopf 73' und Werkzeug 81 zugeordnet. Bei einem Umlauf der Trommel 15' wird unter Wirkung der unterschiedlichen radialen Abstände der Führungsnut 113 zur Trommelachse 8 eine Radialbewegung des Führungsschlittens 115 bewirkt. Diese Radialbewegung bewirkt aufgrund der unter dem Winkel α gegen die Radialachse 118 geneigten Kulisse 122 eine Schwenkbewegung des Werkzeugkopfes 73'.

Für die Axialbewegung der Werkzeugwelle 65' sind an der Planscheibe 17' zwei eine M-Form bildende Führungsschienen 130, 131 festgelegt, welche zwischen sich einen Führungsschlitten 132 führen, welcher eine Doppel V-Form aufweist. Der Führungsschlitten 132 trägt an seinem äusseren Ende eine Führungsrolle 133, welche in die Führungsnut 112 des Segmentstückes 110 eingreift. Auf der Aussenseite trägt der Führungsschlitten 132 ein Kulissenstück 134, das mittels zweier Schrauben 135 festgelegt ist. Das Kulissenstück 134 weist eine Kulisse 135 auf, deren Achse 136 um einen kleinen Winkel β gegen die Achse 137 gerichtet ist, in welcher der Führungsschlitten 132 bewegbar ist. Die Achsen 118, 137 des Führungschlittens 115 bzw. des Führungsschlitten 132 verlaufen jeweils radial zur Trommelachse 8 und durch die Schwenkachse 66 der Werkzeugwelle 65'.

In die Kulisse 136 greift eine Führungsrolle 138 ein, welche innerhalb einer in der Werkzeugwelle 65 drehbar gelagerten, geschlitzten Hülse 139 mittels eines Lagerstiftes 140 gelagert ist. Die Hülse 139 ist axial in der Welle 65' festgelegt.

Eine Verschiebebewegung des Führungsschlittens 132 in seiner Radialachse 137 bewirkt aufgrund des kleinen Winkels β, unter welchem die Kulisse 135 gegenüber der Radialachse 137 angestellt ist, eine Axialverschiebung der Werkzeugwelle 65'. Das Eingreifen des radial beweglichen Kulissenstückes 134 in die Werkzeugwelle 65' behindert deren Schwenkarbeit nicht, da die Werkzeugwelle 65', gegenüber der Hülse 139 schwenkbar bleibt.

Das Kulissenstück 120 mit der Kulisse 122 liegt in einer Ebene parallel zur Planscheibe 18' und parallel zum Werkzeugkopf 73', so dass auch die Arbeitsebene der einseitig offenen Kulisse 122 in dieser Ebene liegt. Die Verschiebeebene der Kulisse 122 liegt in einer zur Achse 66 der Werkzeugwelle 65' senkrechten Ebene.

Demgegenüber liegt die Verschiebeebene des Kulissenstückes 134 und der Kulisse 135 in der Ebene der Achse 66 der Werkzeügwellen 65', so dass auch die Verschiebeebene der Kulisse 135 in dieser Ebene liegt, welche mit der Radialachse 137 des Führungsschlittens 132 zusammenfällt.

Auch das Kulissenstück 134 weist einen sich vom inneren Ende des Kulisse 135 erstreckenden Schlitz 141 auf, dessen Schlitzweite mittels einer Schraube 142 einstellbar ist, so dass auch die Weite der Kulisse 135 ein- bzw. nachstellbar ist.

Die Neigungswinkel $\alpha$ und $\beta$ der Kulissen 122 bzw. 135 bestimmen den Schwenkweg bzw. den Axialhub der Werkzeugwelle 65'.

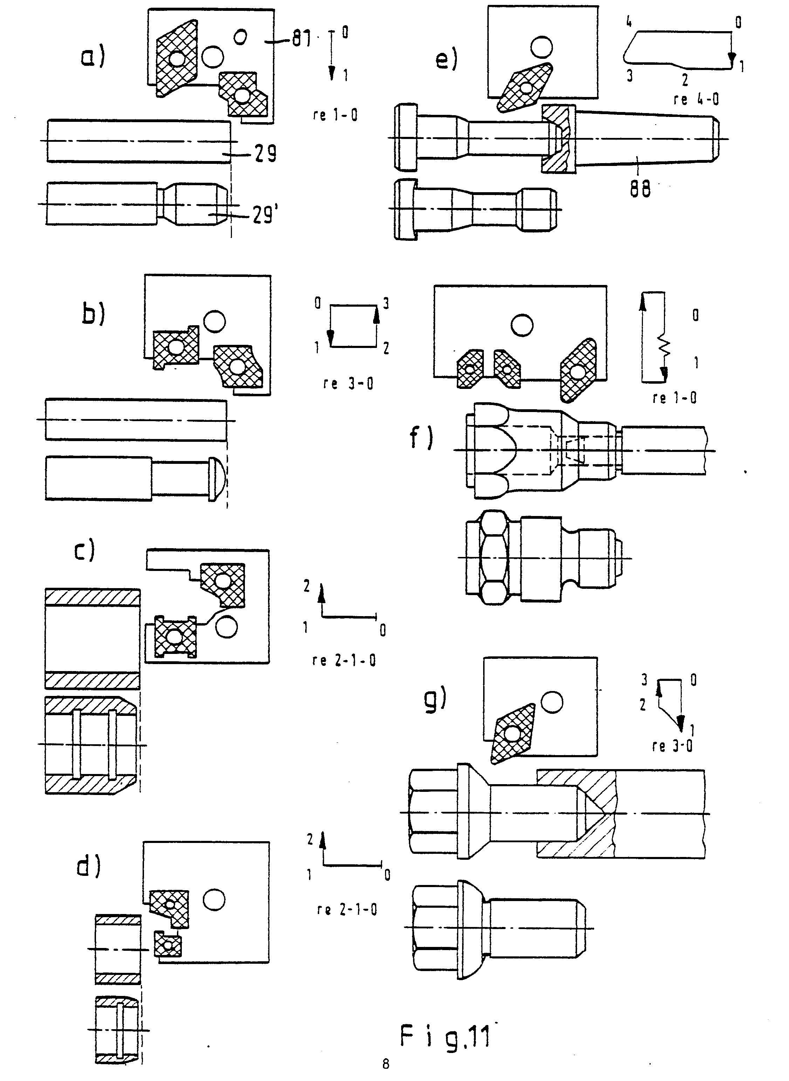

Die Fig. 11 zeigt verschiedene Arbeitsbeispiele für Werkstücke, welche mittels des beschriebenen Sechsspindel-Drehautomaten bearbeitbar sind. Bei allen Beispielen sind Draufsichten auf das mehrere Werkzeugschneiden umfassende Werkzeug 81 zusammen mit dem jeweiligen Werkstück vor und nach der Bearbeitung dargestellt. Mittels Pfeilen sind die aufeinanderfolgenden Arbeitsschritte in der Reihenfolge 0 bis 4 und rückwärts (Re 4-0) dargestellt. Dabei bedeutet der vertikale Pfeil jeweils eine Schwenkbewegung des Werkzeugkopfes 73, 73' um die Achse 66 der Werkzeugwelle 65, 65'. Der horizontale Pfeil bedeutet eine Axialbewegung des Werkzeugkopfes 73, 73' in Richtung der Achse 66 der Werkzeugwelle 65, 65'. Eine schräge Pfeillinie bedeutet eine überlagerte Bewegung in beiden Richtungen.

So zeigt die Fig. 11a das Anfasen und Freistechen eines Werkstückes. Die Fig. 11b zeigt ein Einstechen, Längsbearbeiten und Balligdrehen einer Werkstückstirnfläche. Die Fig. 11c und 11d zeigen ein äusseres Anfasen und inneres Einstechen. Die Fig. 11e zeigt die Herstellung einer Dehnschraube durch Einstechen, Längssbearbeiten und Ausbildung einer Schrägfläche und einem Hinterdrehen der Stirnseite eines Schraubenkopfes. Dabei ist das Werkstück in einer Reitstockspitze 88 aufgenommen.

Die Fig. 11f zeigt die Herstellung eines Zündkerzenkörpers. Dabei kann die Radialbewegung von 0 nach 1 oszillierend erfolgen, um durch wechselseitiges Zerspanen der Flanken bis zum Kerndurchmesser der Nut zu arbeiten. Hierdurch werden sogenannte Drei-Flankenspäne vermieden, die das Werkzeug unnötig belasten, eine grosse Hitze erzeugen und den Span nur unnötig verfestigen würden. Dabei oszilliert das Werkzeug 81 in der Axialebene mit kurzem Hub hin und her, wobei der jeweils begonnene Span abbricht und anschliessend die andere Flanke zerspant wird. Es ergeben sich kurze, gut beseitigbare Späne. Auch hier ist das Werkstück von einer Reitstockspitze aufgenommen. Die Fig. 11g zeigt die Herstellung von Radbolzen, deren aus Nut und Radius bestehende Kontur ausgearbeitet wird. Auch hier ist das Werkstück wieder in der Reitstockspitze aufgenommen.

Schliesslich zeigt die Fig. 12 die Herstellung eines ganz besonders schwierig zu bearbeitenden Hülsenkörpers, der ein Schneideringprofil erhält, das eine möglichst optimale Spitze unter Vermeidung einer Gradbildung erhalten muss. Hier wird zunächst das Profil im Einstechverfahren vorgearbeitet und im gleichen Arbeitsgang mit dem gleichen Werkzeug fein nachgeschlichtet. Die dabei erzielte Spitze an der Innenkante des Schneidringes ist äusserst scharfkantig ausgebildet.

**Patentansprüche**

1. Mehrspindel-Drehautomat, insbesondere zur Nachbearbeitung von spanlos vorbearbeiteten, fließgepreßten rotationssymmetrischen Werkstücken (29), wie z. B. Schrauben, Rad- und Schweißbolzen, Hohlkörper, Ringe und dgl. sowie Trennstücke von Stangenmaterial, mit einer drehangetriebenen Trommel (15), mit mehreren symmetrisch am Umfang der Trommel und mit zur Trommelachse (8) parallelen Achsen (30) angeordneten drehangetriebenen Werkstückspindeln, mit diesen zugeordneten, an der Trommel gelagerten, in Richtung der Trommelachse und quer zu dieser bewegbaren Werkseugen (81) und mit gehäusefesten Steuerkurven (75, 75', 91) für die Bewegung der Werkzeuge gegenüber den Werkstückspindeln, dadurch gekennzeichnet, daß die Werkzeuge (81) auf um zur Trommelachse (8) parallelen Achsen (66) axial hin- und herbewegbaren, um die Achsen (66) schwenkbaren und von den Steuerkurven (75, 75', 91) bewegbaren Werkzeugwellen (65) gelagert sind.

2. Mehrspindel-Drehautomat nach Anspruch 1, dadurch gekennzeichnet, daß an der Trommel (15) radial zu den Achsen (8, 66) der Trommel (15) und der Werkzeugwellen (66) jeder Werkzeugwelle (65) zugeordnete Führungsschlitten (115, 132) geführt sind, deren eines Ende mittels einer Führungsrolle (119, 133) in die geschlossen ausgebildete Führungsnut (113, 112) einer Steuerkurve (75') eingreift und deren anderes Ende über eine Kulisse (122, 136) mit Führungsrolle (124, 138) mit der Werkzeugwelle (65') verbunden ist, wobei die Achse (118, 137) der Kulisse (122, 136) unter einem kleinen Winkel ($\alpha$, $\beta$) gegen die Radialachse des Führungsschlittens geneigt angeordnet ist.

3. Mehrspindel-Drehautomat nach Anspruch 2, dadurch gekennzeichnet, daß die Werkzeuge (81) auf an den Werkzeugwellen (65) angebrachten segmentförmigen Werkzeugköpfen (73') gelagert sind, an welchen die Führungsrolle (124) für die Schwenkbewegung der Werkzeugwelle (65') angebracht ist, und daß die zugehörige Kulisse (122) in einer Ebene senkrecht zur Achse (66) der Werkzeugwelle (65') angeordnet und bewegbar ist.

4. Mehrspindel-Drehautomat nach Anspruch 2, dadurch gekennzeichnet, daß die Führungsrolle (138) für die hin- und hergehenden Bewegungen der Werkzeugwellen (65) innerhalb einer in der Werkzeugwelle (65') drehbar gelagerten, geschlitzten Hülse (139) angeordnet ist und daß die zugehörige Kulisse (136) in der Ebene der Achse (66) der Werkzeugwellen (65') angeordnet und bewegbar ist.

5. Mehrspindel-Drehautomat nach einem der Ansprüche 1 bis 4, dadurch gekennzeichnet, daß die geschlossenen Führungsnuten (112, 113) der Steuerkurven (75') an den Stirnseiten der Gehäusewände (17', 18') angeordnet sind und sich nur über den zur Bearbeitung der Werkstücke (29) notwendigen Teil des Umfanges der Trommel (15) . erstrecken.

6. Mehrspindel-Drehautomat nach Anspruch 1, dadurch gekennzeichnet, daß den Werkzeugwellen (65) sich an der Trommel (15) abstützende Federelemente zum Andrücken an die Steuerkurve (75) zugeordnet sind.

7. Mehrspindel-Drehautomat nach Anspruch 6, dadurch gekennzeichnet, daß die Federelemente als die Werkzeugwellen (65) umgebende, mit Axialspannung versehene Torsionsfedern (69) ausgebildet sind.

8. Mehrspindel-Drehautomat nach Anspruch 7, dadurch gekennzeichnet, daß den unter Wirkung der axial und radial wirkenden Torsionsfedern (69) stehenden Werkseugwellen (65) an der Trommel (15) gelagerte, axial verschiebbare Stößel (89) zugeordnet sind, die mittels einer gehäusefesten Führungskurve (91) gegen die Wirkung der Torsionsfedern (69) der Werkzeugwellen (65) axial bewegbar sind.

9. Mehrspindel-Drehautomat nach einem der Ansprüche 1 bis 8, dadurch gekennzeichnet, daß den mit Spannzangen (31) versehenen Werkstückspindeln an der Trommel (15) axial bewegbar gelagerte Gegenhalter (88) für die Werkstücke (29) zugeordnet sind.

10. Mehrspindel-Drehautomat nach Anspruch 9, dadurch gekennzeichnet, daß die Gegenhalter (8) als drehangetriebene Spannzangen (31') für die Werkstücke (29) ausgebildet sind.

11. Mehrspindel-Drehautomat nach Anspruch 10, dadurch gekennzeichnet, daß die Gegenhalter (88) auf an der Trommel (15) gelagerten, axial beweglichen Wellen (92) angeordnet sind und über eine gehäusefeste Führungskurve (90) mittels Führungselementen (93) axial gesteuert sind.

**Claims**

1. Automatic multi-spindle lathe, particularly for remachining of non-cuttingly premachined, extrusion-moulded, axially symmetrical workpieces (29), as, e. g., screws, wheel and weld bolts, rings and the like as well as separators of bar material, having a driven drum (15) with several workpiece spindles arranged symmetrically about the periphery of the drum and with axes (30) parallel to the drum axis (8), having tools (81) being arranged on the drum and being movable in direction of the drum axis and laterally to the latter and having fixed cams (75, 75', 91) in the housing for the motion of the tools with respect to the workpiece spindles, characterized by that the tools (81) are borne in tool spindles (65) being movable about axes (66) parallel to the drum axis (8) with a reciprocating axial motion about those axes (66) and movable by the cams (75, 75', 91).

2. Automatic multi-spindle lathe according to claim 1, characterized by that at the drum (15), radially to the axes (8, 66) of the drum (15) and of the workpiece spindles (66), guide carriages (115, 132) associated to each workpiece spindle (65) are guided, one end of which engages by means of guide roller (119, 133) with the guide groove (113, 112) of closed design of a cam (75') and the other of which is connected over a sliding device (122, 136) with guide roller (124, 138) to the tool spindle (65'), the axis (118, 137) of the sliding device (122, 136) being arranged slopedly under a small angle $(\alpha, \beta)$ with respect to the radial axis of the guide carriage.

3. Automatic multi-spindle lathe according to claim 2, characterized by that the tools (81) are borne on segmentally shaped tool heads (73') arranged on the tool spindles (65), on those heads the guide roller (124) for the turning motion of the tool spindle (65') being arranged, and that the associated sliding device (122) is arranged and movable in a plane vertical to axis (66) of the tool spindle (65').

4. Automatic multi-spindle lathe according to claim 2, characterized by that the guide roller (138) for the reciprocating motions of the tool spindles (65) is arranged within a sleeve (139) being integrated in turnable manner in the tool spindle (65') and being slotted ant that the associated sliding device (136) is arranged and movable in the plane of the axis (66) of the tool spindles (65').

5. Automatic multi-spindle lathe according to one of claims 1 to 4, characterized by that the closed-design guide grooves (112, 113) of the cams (75') are arranged on the front sides of the housing walls (17', 18') and that they extend only over the portion of the periphery of the drum (15) being necessary for machining of the workpieces (29).

6. Automatic multi-spindle lathe according to claim 1, characterized by that the tool spindles (65) are associated with spring elements supported on the drum (15) for pressing on the cam (75).

7. Automatic multi-spindle lathe according to claim 6, characterized by that the spring elements are designed as torsion springs (69) surrounding the tool spindles (65) and being provided with axial tension.

8. Automatic multi-spindle lathe according to claim 7, characterized by that plungers (89) being arranged at the drum (15) and being axially movable are associated to the tool spindles (65) being influenced by the torsion springs (69) effective axially and radially, those plungers being movable axially by means of cam (91) fixed in the housing against the effect of the torsion springs (69) of the tool spindles (65).

9. Automatic multi-spindle lathe according to one of claims 1 to 8, characterized by that axially movable countersupports (88) for the workpieces (29) are associated to the tool spindles on the drum (15) provided with clamping pliers (31).

10. Automatic multi-spindle lathe according to claim 9, characterized by that the countersupports (8) are designed as driven clamping pliers (31') for the workpieces (29).

11. Automatic multi-spindle latheaccording to claim 10, characterized by that the countersupports (88) are arranged on spindles (92) being borne on the drum (15) and being axially movable and that they are axially controlled over a cam (90) being in the housing by means of guide elements (93).

### Revendications

1. Tour automatique à broches multiples, surtout pour la retouche de pièces à symétrie de révolution formées par fluage et sans enlèvement de copeaux (29), tels que vis, pivots de roue et pivots à souder, corps creux, anneaux et autres, ainsi que pièces intermédiaires de barres, avec une tourelle revolver à moteur d'orientation (15), avec plusieurs broches porte-pièces à moteur d'orientation disposées symétriquement sur le pourtour de la tourelle et avec des axes (30) parallèles à l'axe de la tourelle (8), avec des outils (81) coordonnés à cette dernière, logés sur la tourelle en direction de l'axe de la tourelle et déplaçables transversalement à cette dernière et avec des cames de commande (75, 75', 91) pour le déplacement des outils par rapport aux broches porte-pièce, caractérisé par le fait, que les outils (81) sont logés sur des axes (66) parallèles à l'axe du tour (8) déplaçables axialement en va et vient, pivotables autour des axes (66), les axes d'outils (65) étant déplaçables par les cames de commande (75, 75', 91).

2. Tour automatique à broches multiples selon revendication 1, caractérisé par le fait que des chariots (115, 132) coordonnés à chaque axe d'outil (65) se déplacent devant la tourelle (15) radialement par rapport aux axes (8, 66) de la tourelle (15) et aux axes d'outil (66), une extrémité des chariots mordant par l'intermédiaire d'un galet de guidage (119, 133) dans la rainure de guidage (113, 112) d'une came de commande (75') et l'autre extrémité étant reliée par un galet de guidage (124, 138) avec l'axe d'outil (65') à travers une coulisse (122, 136), l'axe (118, 137) de la coulisse (122, 136) étant placé en biais sous un petit angle (α, β) par rapport à l'axe radial du chariot.

3. Tour automatique à broches multiples selon revendication 2, caractérisé par le fait que les outils (81) sont logés sur des têtes porte-outil (73') disposées sur les axes d'outil (64), sur ces têtes étant disposé le galet de guidage (124) pour le mouvement pivotant de l'axe d'outil (65'), et par le fait que la coulisse (122) correspondante est logée sur un plan perpendiculaire à l'axe (66) de l'axe d'outil (65') et est pivotable.

4. Tour automatique à broches multiples selon la revendication 2, caractérisé par le fait que le galet de guidage (138) pour le déplacement en va et vient des axes d'outil (65) est logé dans une douille (139) fendue disposée de façon rotative dans l'axe d'outil (65') et que la coulisse (136) correspondante est logée de façon mobile dans le plan de l'axe (66) des axes d'outil (65').

5. Tour automatique à broches multiples selon les revendications 1 à 4, caractérisé par le fait que les rainures de guidage fermées (112, 113) des cames de guidage (75') sont disposées sur les faces frontales des parois du bâti (17', 18') et ne s'étendent que sur la partie du pourtour de la tourelle (15) nécessaire à l'usinage de la pièce (29).

6. Tour automatique à broches multiples selon la revendication 1, caractérisé par le fait que des éléments élastiques s'appuyant sur la tourelle (15) pour la pression sur la came de commande (75) sont affectés aux axes d'outil (65).

7. Tour automatique à broches multiples selon la revendication 6, caractérisé par le fait que les éléments élastiques sont conçus comme ressorts à torsion (69) avec tension axiale entourant les axes d'outil (65).

8. Tour automatique à broches multiples selon la revendication 7, caractérisé par le fait que des poussoirs (89) déplaçables axialement et logés sur la tourelle (15) sont affectés aux axes d'outil (65) se trouvant sous l'effet des ressorts à torsion agissant axialement et radialement, ces poussoirs étant déplaçables moyennant une came de guidage (91) montée fermement sur la bâti, en antagonisme à l'action des ressorts à torsion (69).

9. Tour automatique à broches multiples selon une des revendications 1 à 8, caractérisé par le fait que des lunettes (88) mobiles en direction axiale pour les pièces (29) sont affectées aux broches munies de pinces de serrrage (31) sur la tourelle (15).

10. Tour automatique à broches multiples selon la revendication 9, caractérisé par le fait que les lunettes (8) sont conçues comme pinces de serrage (31') rotatives pour les pièces (29).

11. Tour automatique à broches multiples selon la revendication 10, caractérisé par le fait que les lunettes (88) déplaçables axialement et logées sur la tourelle (15) sont commandées axialement à travers une came de commande (90), montée à demeure sur le bâti, moyennant des éléments de guidage (93).

Fig.1

Fig.2

Fig.3

C

38

49

34

48

45

46

44

49

45 47 48

Fig.4

Fig.5

Fig.6

A

119

115    118

111

113

122    124

28

81    73'

66    65'

8

7'

B    2

133    112

113    119    X

132

110

134    5'    5"    120

111    121

Y    115

135    124

141    67' 68'

β 137    65' 66'    116    73'

135

136    114

139

138    8

7'

17'    15'    18'

28

30    5'    5"

112    113

110    111

2'

0 119 236

# F i g.7

Fig. 8

18'

117

116

115

116

120

Fig. 12

29

81

4  3

2  1

5  0

Fig.9

Fig.10

F i g. 11